(19) Europäisches Patentamt
European Patent Office
Office européen des brevets

(11) **EP 0 881 505 B1**

(12) **FASCICULE DE BREVET EUROPEEN**

(45) Date de publication et mention
de la délivrance du brevet:
**05.03.2003 Bulletin 2003/10**

(51) Int Cl.⁷: **G01S 13/90**

(21) Numéro de dépôt: **98401207.0**

(22) Date de dépôt: **19.05.1998**

(54) **Procédé de recalage de navigation d'un mobile au moyen d'une cartographie radar de zones de terrain à relief accentue**

Verfahren zur wiederholten Ortung für ein Fahrzeug mit Hilfe der Radar-Kartographie von unebenem Gelände

Method of repeated position-finding for a mobile object using radar cartographie of uneven terrain

(84) Etats contractants désignés:
**DE FR GB**

(30) Priorité: **30.05.1997 FR 9706683**

(43) Date de publication de la demande:
**02.12.1998 Bulletin 1998/49**

(73) Titulaire: **Thales**
**75008 Paris (FR)**

(72) Inventeurs:
• **Duret, Marc, Thomson-CSF Prop. Intel.**
**94117 Arcueil cedex (FR)**
• **Chamouard, Eric, Thomson-CSF Prop. Intel.**
**94117 Arcueil cedex (FR)**
• **Fronteau, Boris, Thomson-CSF Prop. Intel.**
**94117 Arcueil cedex (FR)**

(74) Mandataire: **Guérin, Michel et al**
**THALES Intellectual Property**
**13, Avenue du Président Salvador Allende**
**94117 Arcueil Cédex (FR)**

(56) Documents cités:
**US-A- 5 189 424**

• **ULANDER L M H: "RADIOMETRIC SLOPE CORRECTION OF SYNTHETIC-APERTURE RADAR IMAGES" IEEE TRANSACTIONS ON GEOSCIENCE AND REMOTE SENSING, vol. 34, no. 5, septembre 1996, pages 1115-1122, XP000636968**

• **CURLANDER J C: "INTERFEROMETRIC SYNTHETIC APERTURE RADAR FOR TERRAIN MAPPING" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPECIAL SESSIONS/ AUDIO AND ELECTROACOUSTICS/ UNDERWATER ACOUSTIC SIGNAL PROCESSING/ VERY LARGE SCALE INTEGRATION FOR SIGNAL P, vol. 5, 9 mai 1995, INSTITUTE OF ELECTRICAL AND ELECTRONICS ENGINEERS, pages 2801-2804, XP000534696**

• **YERKES C ET AL: "INTERFEROMETRIC SYNTHETIC APERTURE RADAR PROCESSING ON A MASSIVELY PARALLEL SUPERCOMPUTER" RECORD OF THE ASILOMAR CONFERENCE ON SIGNALS, SYSTEMS AND COMPUTERS, PACIFIC GROVE, OCT. 30 - NOV. 2, 1994, vol. VOL. 1, no. CONF. 28, 30 octobre 1994, INSTITUTE OF ELECTRICAL AND ELECTRONICS ENGINEERS, pages 132-136, XP000533564**

• **QIAN LIN ET AL: "NEW APPROACHES IN INTERFEROMETRIC SAR DATA PROCESSING" IEEE TRANSACTIONS ON GEOSCIENCE AND REMOTE SENSING, vol. 30, no. 3, 1 mai 1992, pages 560-567, XP000290467**

**Description**

La présente invention concerne le recalage de navigation d'un mobile tel qu'un aéronef, porteur d'un équipement de cartographie radar ainsi que la mise en conformité des vues radar obtenues dans un repère terrestre absolu tridimensionnel.

Le recalage de navigation d'un aéronef à l'aide d'un système de cartographie radar embarqué se fait par localisation d'une vue radar de la zone survolée prise à bord au moment du recalage au sein d'un atlas de cartes de référence préenregistrées avant la mission et mémorisées à bord de l'aéronef.

Une vue radar du sol prise à bord d'un mobile est une vue en deux dimensions, l'une des dimensions étant la distance radiale au radar mesurée par un temps de retard d'écho et l'autre le décalage de fréquence Doppler qui est représentatif d'un écartement transversal par rapport à l'axe du faisceau du radar dans un plan contenant la route du mobile. En présence d'un relief accentué, une vue radar du sol qui n'est pas prise à la verticale, a un aspect changeant dépendant fortement de la position et de l'angle de prise de vue. Cette forte dépendance d'aspect en fonction de la position et de l'angle de prise de vue empêche la localisation d'une vue radar brute d'une zone de sol à relief accentué par rapport à des cartes de référence correspondant à des vues à la verticale, par une simple superposition précédée de la translation et de la rotation qui conviennent. Il faut alors prévoir différents jeux de cartes radar prises sous des positions et des angles de vue divers ce qui complique sérieusement les opérations de localisation et l'encombrement en mémoire des cartes radar.

Jusqu'à présent, on évite cette difficulté, en ne procédant à un recalage de navigation à l'aide d'un système de cartographie radar embarqué que sur des zones de terrain plat ou à relief suffisamment faible pour que la vue radar brute du sol au moment du recalage ne subisse, en fonction de la position et de l'angle de prise de vue que des variations de formes inférieures à la précision des cartes de référence. Le recalage utilise alors des échos de points caractéristiques ou amers (croisements de voies de communication, bâtiments typiques tels que tours, clochers, pylônes, etc...) dont les positions au sol sont connues a priori pour rechercher la translation et la rotation menant à une superposition de la vue radar et d'une carte de référence mémorisée.

La présente invention a pour but de lutter contre cette limitation et de permettre un recalage de navigation, par cartographie radar, d'un mobile se déplaçant au-dessus d'une zone de terrain à relief accentué telle qu'une agglomération ou une région montagneuse.

Elle a pour objet un procédé de recalage de la position de navigation estimée $(\hat{X}_c, \hat{Y}_c)$ d'un mobile et de sa route estimée $\alpha_c$ dans un repère terrestre absolu au moyen d'une cartographie radar d'une zone de terrain à relief accentué effectuée à l'aide d'un radar embarqué à bord du mobile et pourvu d'une antenne monopulse dans le plan vertical, qui consiste :

-  à prendre une vue radar d'une zone du sol au moment du recalage, depuis un point de localisation estimé de coordonnées $(X,Y,Z)$, sous un angle de prise de vue S en site et G en azimut et à en déduire une image radar du sol à deux dimensions définie par un tableau de coefficients de réflectivité de points du sol $\sigma_0(D,f_d)$ repérés par une coordonnée de distance radiale D selon l'axe de pointage du faisceau du radar et par une coordonnée $f_d$ de décalage de fréquence Doppler selon une direction transversale à l'axe du faisceau du radar parallèle à la route du mobile, S et G étant respectivement les angles en site et en azimut dans un repère terrestre lié au mobile avec un axe de coordonnée x horizontal parallèle à la route du mobile et un axe de coordonnée y horizontal perpendiculaire à la route du mobile,
-  à mesurer par un procédé interférométrique l'angle de site $S + \delta_S$ des différents points de l'image radar du sol au moyen de l'antenne utilisée en monopulse dans le plan vertical, $\delta_s$ étant l'écart en site du point considéré par rapport à l'axe du faisceau radar,
-  à déduire du décalage de fréquence Doppler $f_d$ et de l'angle de site $S+\delta_s$ mesurés pour chaque point de l'image radar du sol l'angle d'azimut $G + \delta_G$, par rapport à la route du mobile, de chaque point de l'image radar du sol, G étant l'angle d'azimut de l'axe du faisceau radar dans le repère terrestre lié au mobile et $\delta_G$ l'écart en azimut du point considéré par rapport à l'axe du faisceau radar par mise en oeuvre de la relation :

$$f_d = \frac{2V_c}{\lambda}\cos(G + \delta_G)\cos(S + \delta_S)$$

V$_c$ étant le module du vecteur vitesse du mobile et $\lambda$ la longueur d'onde du radar,
-  à déduire les coordonnées tridimensionnelles estimées $(X,Y,Z_{rad})$ dans le repère terrestre absolu de chaque point l'image radar du sol à deux dimensions $(D, f_d)$ à partir de ses coordonnées sphériques : distance D, angle de site

$S + \delta_s$ et angle d'azimut $G + \delta_G$ dans le repère lié au mobile par mise en oeuvre des relations :

$$\begin{cases} \hat{X} = \hat{X}_c + D\cos(S + \delta_s)\cos(G + \delta_G - \alpha_c) \\ \hat{Y} = \hat{Y}_c + D\cos(S + \delta_s)\sin(G + \delta_G - \alpha_c) \\ \hat{Z}_{rad} = \hat{Z}_c - D\sin(S + \delta_s) \end{cases}$$

$\alpha_c$ étant l'angle que fait la route du mobile par rapport au repère terrestre absolu,

- à rechercher sur une carte tridimensionnelle, à coordonnées (X, Y, $Z_{ref}$), stockées en mémoire, des zones dont les coordonnées X et Y des points correspondent aux coordonnées $X$ et $Y$ des points de l'image radar avec différents jeux de valeurs d'écarts possibles $\Delta X_c$, $\Delta Y_c$ et $\Delta\alpha_c$ pour la position et la route du mobile par mise en oeuvre de la relation :

$$\begin{pmatrix} \hat{X} \\ \hat{Y} \end{pmatrix} = \begin{pmatrix} X \\ Y \end{pmatrix} + \begin{pmatrix} \Delta X_c \\ \Delta Y_c \end{pmatrix} + \sqrt{\left(X - \hat{X}_c + \Delta X_c\right)^2 + \left(Y - \hat{Y}_c + \Delta Y_c\right)} \Delta\alpha_c \begin{pmatrix} -\sin G \\ \cos G \end{pmatrix}$$

- à calculer le maximum du coefficient de corrélation p entre les altitudes $\hat{Z}_{rad}$ et $Z_{ref}$ des points de l'image radar du sol repérés en coordonnées tridimensionnelles et des points de chaque zone de la carte tridimensionnelle lui correspondant pour les différents jeux de valeurs d'écarts possibles $\Delta X_c$, $\Delta Y_c$ et $\Delta\alpha_c$ :

$$\underset{\Delta X_c, \Delta Y_c, \Delta\alpha c}{MAX\ \rho} = \frac{E\left[\left(\hat{Z}_{rad} - \overline{\hat{Z}}_{rad}\right)\left(Z_{ref} - \overline{Z}_{ref}\right)\right]}{\sqrt{E\left[\left(\hat{Z}_{rad} - \overline{\hat{Z}}_{rad}\right)^2\right] E\left[\left(Z_{ref} - \overline{Z}_{ref}\right)^2\right]}}$$

et,

- à adopter comme termes correctifs de la position et de la route du mobile le jeu de valeurs $\Delta X_c$, $\Delta Y_c$ et $\Delta\alpha_c$ correspondant au maximum obtenu.

On peut alors également apprécier l'erreur $\Delta Z_c$ faite sur l'altitude estimée $\hat{Z}_c$ du mobile puisque celle-ci est égale à la différence entre l'altitude moyenne mesurée des points de l'image radar du sol et l'altitude moyenne de référence des points de la zone de la carte reconnue comme correspondant aux points de l'image radar du sol.

De manière avantageuse, le procédé de recalage de navigation selon l'invention peut être complété par une mise en conformité géométrique de l'image radar du sol faisant disparaître les déformations dues à l'appréciation du relief sous un angle de visée différent de la verticale. Cette mise en conformité géométrique consiste à exprimer les coordonnées (X, Y, $Z_{ref}$) des points de la zone de la carte tridimensionnelle reconnue comme correspondant aux points de l'image radar du sol en fonction des coordonnées bidimensionnelles (D, $f_d$) de cette dernière afin de permettre d'associer à chaque point de ladite zone un coefficient de réflectivité et d'en faire une carte radar.

D'autres caractéristiques et avantages de l'invention ressortiront de la description ci-après d'un mode de réalisation donné à titre d'exemple. Cette description sera faite en regard du dessin dans lequel :

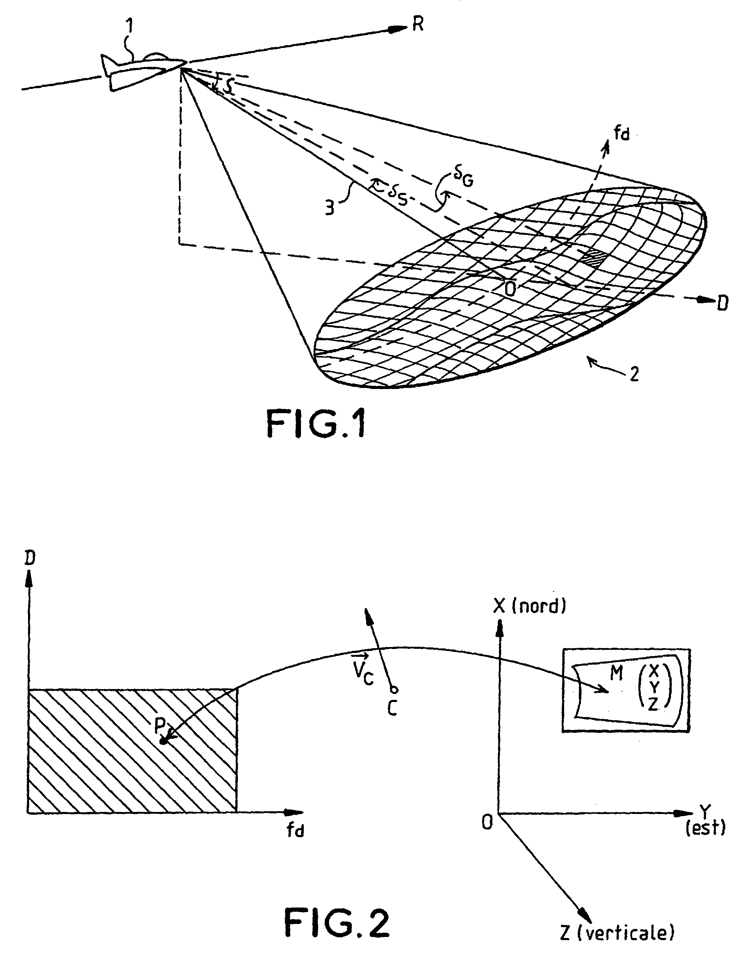

- une figure 1 illustre, de façon schématique, une prise de vue radar du sol depuis un porteur en déplacement, mettant en évidence le caractère à deux dimensions d'une telle prise de vue, et
- une figure 2 illustre, de façon schématique, la relation biunivoque que le procédé selon l'invention permet d'établir entre les coordonnées distance radiale D et décalage Doppler $f_d$ de l'espace bidimensionnel de mesure d'une prise de vue radar et les coordonnées cartésiennes X, Y et Z de l'espace tridimensionnel de référence d'un fichier numérique de terrain.

On distingue sur la figure 1 un avion 1 suivant une route R au-dessus du sol et illuminant latéralement avec son radar une zone 2 du sol afin d'en obtenir une vue radar. L'axe 3 du faisceau du radar intercepte le sol au centre O de la zone 2 sous un angle de site S mesuré dans un repère terrestre lié à l'avion 1 ayant un axe de coordonnée x horizontal, orienté parallèlement à la route de l'avion et un axe de coordonnée y horizontal, perpendiculaire à la route de l'avion. Chaque point du sol de la zone illuminée 2 retourne un écho avec un retard dépendant de sa distance radiale D au radar et avec un décalage de fréquence Doppler $f_d$ fonction de sa vitesse relative de déplacement par rapport au radar due au déplacement de l'avion 1. La distance radiale D et la fréquence de décalage Doppler $f_d$ permettent de quadriller la zone illuminée 2 du sol en cases distance-décalage Doppler dont la surface élémentaire dépend de la résolution avec laquelle le radar peut distinguer deux distances radiales différentes et deux décalages Doppler différents. On a représenté un tel quadrillage sur la figure 1, avec un axe distance D rectiligne correspondant à l'intersection avec le sol du plan vertical passant par le radar et l'axe du faisceau radar, et un axe écart Doppler $f_d$ en arc d'hyperbole matérialisant l'intersection avec le sol d'un cône ayant pour sommet l'avion 1, pour axe le vecteur vitesse de l'avion et pour demi-angle au sommet θ l'angle vérifiant la relation :

$$f_d = \frac{2V}{\lambda} \cos\theta$$

θ étant l'angle entre la direction visée par le radar et le vecteur vitesse de l'avion. Ainsi, une vue radar brute du sol est constituée d'un tableau à deux dimensions : distance radar D et décalage Doppler $f_d$, des valeurs prises par le module de l'écho retourné, c'est-à-dire le coefficient de réflectivité du sol $\sigma_0$ :

$$\sigma_0 = \sigma_0(D, f_d)$$

L'aspect d'une telle vue radar brute du sol en deux dimensions est fortement dépendant, lorsqu'il y a du relief, de la position et de l'angle de prise de vue. En raison de cette forte dépendance d'aspect, une vue radar brute d'une zone de sol à relief accentué ne peut être localisée par rapport à des cartes correspondant à des vues à la verticale par une simple superposition précédée de la translation et de la rotation qui conviennent. Il faut au contraire prévoir différents jeux de cartes radar prises sous des positions et des angles de vue divers ce qui complique singulièrement les opérations de localisation et l'encombrement en mémoire des cartes, sans parler du fait qu'il est souvent difficile de réaliser ces cartes radar, notamment lorsqu'elles doivent être obtenues en ambiance hostile.
Pour éviter ce problème, il est d'usage de ne pratiquer un recalage de navigation par cartographie radar que dans les zones de terrain à relief suffisamment plat pour que la vue radar brute du sol prise au moment du recalage présente un aspect peu dépendant de l'angle de prise de vue, avec des variations de forme en fonction de cet angle de prise de vue inférieures à la précision des cartes radar. Le recalage s'effectue alors sur des points caractéristiques ou amers (croisements de voies de communication, tours, clochers, pylônes, etc...). On se prive donc pour le recalage de navigation des caractéristiques du relief qui sont pourtant souvent connues avec précision et qui sont d'une grande aide à la navigation à vue.
On se propose ici de se servir du relief pour le recalage de navigation par cartographie radar en ajoutant à une vue radar brute du sol la notion d'altitude qui lui manque appréciée au moyen d'une mesure interférométrique complémentaire. Pour ce faire, on utilise pour la prise de la vue radar brute du sol, un radar monopulse dans le plan vertical avec deux voies de réception permettant de mesurer par comparaison de phase ou d'amplitude, l'écart en site $\delta_s$ de chaque case distance-décalage Doppler par rapport à l'angle de site S de l'axe du faisceau du radar. La différence z d'altitude entre la surface élémentaire du sol correspondant à l'écho séparé dans une case distance-décalage Doppler (D, $f_d$) considérée et le mobile porteur du radar s'écrit alors :

$$z = D\sin(S + \delta_S)$$

On en déduit l'altitude radar $Z_{rad}$ de chaque surface élémentaire de coordonnées (D, $f_d$) de la vue radar brute du sol à partir de l'altitude estimée $Z_c$ du mobile :

$$Z_{rad} = \hat{Z}_c - z = \hat{Z}_c - D\sin(S + \delta_S)$$

La précision de mesure de l'angle de site S+$\delta_s$ de chaque surface élémentaire de coordonnées (D, f$_d$) de la vue radar brute du sol dépend de l'antenne monopulse utilisée. Elle est typiquement de quelques milliradians. A 50 km, pour une précision de 2 mrd, l'erreur $\Delta$z pour la différence d'altitude z a un écart type de 100 m. La mesure d'altitude à l'aide du radar est médiocre. Elle a néanmoins les caractéristiques d'un bruit blanc.

Une fois l'angle de site S+$\delta_s$ de chaque élément de surface du sol de coordonnées (D, f$_d$) déterminé dans le repère terrestre tridimensionnel lié à l'avion 1, on recherche leur angle d'azimut G+$\delta_G$ en partant de la connaissance de leur décalage Doppler f$_d$, de leur angle de site S+$\delta_S$ et du vecteur vitesse $\vec{V}_c$ de l'avion 1. On sait en effet, que le décalage Doppler d'un élément de surface du sol est proportionnel au produit scalaire du vecteur vitesse de l'avion par le vecteur unitaire de la direction de visée de l'élément de surface de sol considéré :

$$f_d = \frac{2}{\lambda}\ \vec{V}_c.\vec{U}_D$$

$\lambda$ étant la longueur d'onde du radar.

En se plaçant dans un système de coordonnées cylindrique et en posant:

$$D = \sqrt{\rho^2 + z^2}$$

où z est la composante verticale dans le repère terrestre lié à l'avion 1 de l'élément de sol considéré et $\rho$ sa distance horizontale par rapport à l'avion 1, on peut écrire :

$$f_d = \frac{2}{\lambda}.\frac{\left(\rho V_\rho \cos(G + \delta G) + z V_z\right)}{\sqrt{\rho^2 + z^2}}$$

V$_p$ étant la vitesse horizontale de l'avion 1 et V$_z$ sa vitesse verticale.

D'où :

$$G + \delta G = \arccos\left(\frac{\frac{\lambda}{2} D f_d - z V_z}{\sqrt{D^2 - z^2}\ V_\rho}\right) \qquad (1)$$

La détermination des angles d'azimut G + $\delta_G$ de tous les éléments de surface de la vue radar brute du sol nécessite une connaissance précise du vecteur vitesse V$_c$ de l'avion 1 qui peut être fournie par une centrale inertielle ou préférablement par le radar lui-même mis en mode de détermination du vecteur vitesse. Ce dernier mode consiste à viser le sol selon trois directions différentes pour mesurer le décalage de fréquence Doppler moyen de l'écho dans les trois directions et à déduire les trois composantes du vecteur vitesse de l'avion à partir des trois équations obtenues :

$$f_{di} = \frac{2}{\lambda}\ \vec{V}_c.\vec{U}_i$$

$\overline{U}_i$ étant le vecteur unitaire de la direction i visée.

La précision de mesure de l'angle d'azimut G+$\delta_G$ d'un élément de surface de la vue radar vidéo brute du sol dépend de la précision de la mesure altimétrique faite au préalable et, en posant :

$$\Delta z = D \sin\left(\Delta(S + \delta_S)\right)$$

on peut écrire, en partant de la relation (1):

$$\Delta(G + \delta_G) = -\left(\frac{V_z}{V_\rho} + \frac{z}{D}\cos(G + \delta_G)\right)\frac{1}{D\sin\theta}\Delta z$$

$\theta$ étant l'angle que fait le vecteur vitesse de l'avion avec la direction de pointage du radar.

Bien que la mesure altimétrique faite avec le radar soit assez médiocre, elle permet de situer assez précisément dans le plan horizontal les éléments de surface de la vue radar brute du sol. En effet l'erreur faite sur la mesure $\rho$ de la projection dans un plan horizontal du segment de droite de longueur D joignant le radar à un élément de surface de la vue radar du sol peut s'écrire :

$$\Delta\rho = -\frac{z}{D}\Delta z$$

Pour z/D=0,1 (élément de surface du sol ayant une altitude de 5.000 mètres et vu du radar à une distance de 50 km) et $\Delta z$ = 100 m, on obtient une erreur de mesure dans le plan horizontale $\Delta\rho$ égale à 10 m.

Après ces mesures et déductions, on est en possession, pour tous les éléments de surface de la vue radar brute du sol, des trois coordonnées sphériques de positionnement : distance radiale D, angle de site S+$\delta_s$ et angle d'azimut G+$\delta_G$ permettant de les situer par rapport au repère terrestre tridimensionnel lié à l'avion 1.

On passe alors dans un repère tridimensionnel terrestre absolu en utilisant la position estimée ($\hat{X}_c, \hat{Y}_c, \hat{Z}_c$) de l'avion dans ce repère terrestre absolu et en transformant les coordonnées sphériques en coordonnées cartésiennes par les relations :

$$\begin{cases} \hat{X} = \hat{X}_c + D\cos(S + \delta_s)\cos(G + \delta_G - \alpha_c) \\ \hat{Y} = \hat{Y}_c + D\cos(S + \delta_s)\sin(G + \delta_G - \alpha_c) \\ \hat{Z}_{rad} = \hat{Z}_c - D\sin(S + \delta_s) \end{cases}$$

$\alpha_c$ étant l'angle que fait la route de l'avion 1 par rapport au repère terrestre absolu,

Pour recaler la position de navigation de l'avion par rapport au repère terrestre tridimensionnel absolu, on procède alors à une localisation de la projection dans un plan horizontal de la vue radar brute du sol constituée du tableau des valeurs du coefficient de réflectivité du sol mesurées, indexées par les deux coordonnées cartésiennes $X$ et $Y$ au sein d'un atlas de cartes en trois dimensions référencées par rapport au repère terrestre tridimensionnel absolu. Cette localisation consiste en une série de comparaisons par superposition entre la projection à l'horizontal de la vue radar brute du sol et des projections à l'horizontal de différentes zones de l'atlas de cartes auxquelles pourrait correspondre la vue radar, et dans la sélection de la zone de l'atlas de carte présentant le plus de similitudes avec la vue radar. Le choix des différentes zones de l'atlas de cartes radar objet des comparaisons résulte d'hypothèses a priori sur l'erreur de localisation et l'erreur de route de l'avion conduisant à des valeurs diverses de déplacements par translation et rotation de la vue radar au sein de l'atlas de cartes.

En effet, soient $X_c, Y_c$ et $Z_c$ la position estimée de l'avion, $\hat{\alpha}_c$ la route estimée de l'avion, $X_c, Y_c$ et $Z_c$ la position réelle de l'avion et $\alpha_c$ la route réelle de l'avion dans le repère terrestre tridimensionnel absolu adopté pour référencer la prise de vue radar et l'atlas de cartes mémorisées. Les erreurs de position $\Delta X_c$, $\Delta Y_c$ et $\Delta Z_c$ et de route $\Delta\alpha_c$ de l'avion peuvent s'écrire :

$$\Delta X_c = \hat{X}_c - X_c$$

$$\Delta Y_c = \hat{Y}_c - Y_c$$

$$\Delta Z_c = \hat{Z}_c - Z_c$$

$$\Delta\alpha_c = \overset{\wedge}{\alpha}_c - \alpha_c$$

Il en résulte entre les coordonnées cartésiennes horizontales estimées $\overset{\wedge}{X}$ et $\overset{\wedge}{Y}$ et les coordonnées cartésiennes horizontales vraies $X$ et $Y$ des éléments de surfaces de la vue radar brute du sol la relation :

$$\begin{pmatrix} \hat{X} \\ \hat{Y} \end{pmatrix} = \begin{pmatrix} X \\ Y \end{pmatrix} + \begin{pmatrix} \Delta X_c \\ \Delta Y_c \end{pmatrix} + \sqrt{\left(X - \hat{X}_c + \Delta X_c\right)^2 + \left(Y - \hat{Y}_c + \Delta Y_c\right)} \Delta\alpha_c \begin{pmatrix} -\sin G \\ \cos G \end{pmatrix}$$

$$(2)$$

Pour déterminer les erreurs de position $\Delta X_c$, $\Delta Y_c$ et $\Delta Z_c$ et de route $\Delta\alpha_c$ de l'avion, on teste, pour différents jeux de valeurs possibles d'erreurs de position et de route, choisies a priori parmi les plus probables, le coefficient de corrélation $\rho$ entre les altitudes $Z_{rad}$ et $Z_{ref}$ des points de la vue radar brute du sol repérés en coordonnées horizontales estimées $X_c$ et $Y_c$ et des points repérés par leurs coordonnées horizontales vraies X et Y de la zone de la carte sensée lui correspondre pour le jeu de valeurs d'erreurs adopté a priori et l'on retient comme erreurs de position et de route, le jeu de valeurs conduisant au maximum de ce coefficient de corrélation $\rho$ :

$$\underset{\Delta X_c, \Delta Y_c, \Delta\alpha_c}{MAX \ \rho} = \frac{E\left[\left(\hat{Z}_{rad} - \overline{Z}_{rad}\right)\left(Z_{ref} - \overline{Z}_{ref}\right)\right]}{\sqrt{E\left[\left(\hat{Z}_{rad} - \overline{Z}_{rad}\right)^2\right]E\left[\left(Z_{ref} - \overline{Z}_{ref}\right)^2\right]}}$$

où $\overline{Z}_{rad}$ et $\overline{Z}_{ref}$ représentent des valeurs moyennes.

L'estimation est faite sur plusieurs centaines de points d'une vue radar brute du sol et, sous réserve que l'erreur sur la différence d'altitude z avec l'avion soit centrée ou même de biais constant, son bruit de mesure est lissé. La précision finale obtenue est inférieure à la précision de mesure des altitudes de référence des points des cartes radars mémorisées.

On remarque également, que l'erreur de positionnement en altitude de l'avion $\Delta Z_c$ est égale à la différence entre l'altitude moyenne de référence des points de la zone de la carte radar correspondant à la vue radar brute du sol prise au moment du recalage et l'altitude moyenne mesurée au radar des points de la vue radar brute elle-même :

$$\Delta Z_c = \overline{Z}_{ref} - \overline{Z}_{rad}$$

ce qui donne la possibilité de recaler la position de l'avion dans les trois dimensions.

Dans la méthode qui vient d'être décrite, le recalage de position de navigation a été obtenu au moyen d'une localisation d'une projection à l'horizontale de la vue radar brute du sol au sein d'un atlas de cartes mémorisées tracées dans un système de coordonnées cartésiennes lié à un repère terrestre absolu. On pourrait aussi envisager d'opérer dans l'espace de mesure du radar, c'est-à-dire dans le domaine des coordonnées D et $f_d$, en procédant, pour le recalage de position de navigation, à la localisation de la vue radar brute du sol elle-même au sein de projections de l'atlas de cartes radar dans le plan de la vue radar brute puisque l'on a pu établir, grâce à la mesure d'altitude, une correspondance entre les coordonnées cartésiennes X, Y, $Z_{ref}$ et les coordonnées D et $f_d$. Le choix, pour effectuer la localisation, de l'espace de mesure du radar ou de l'espace de repérage des cartes à coordonnées cartésiennes dépend des conditions d'échantillonnage respectives des fichiers des cartes de référence et de l'image radar, et des pertes d'information en découlant lors du passage d'un espace à l'autre.

Le recalage de position de navigation est avantageusement réalisé par une méthode hybride utilisant les informations altimétriques tirées du fonctionnement du radar en monopulse dans le plan vertical et les amers classiques : échos ponctuels ou linéiques. La fusion de ces deux types d'information a deux avantages :

- une amélioration de la précision du recalage de position de navigation lorsqu'elles sont toutes les deux disponibles, et
- une extension des possibilités de recalage de position de navigation dans la mesure où le recalage reste possible même lorsque l'une des informations de référence est indisponible.

Une fois la position de navigation de l'avion recalée, il peut être intéressant de mettre en conformité géométrique la vue radar brute du sol avec l'atlas de cartes mémorisées pour réaliser une carte radar à jour. Cette mise en conformité géométrique consiste à affecter correctement un point P de réflectivité $\sigma_0(D, f_d)$ dans l'espace de mesure du radar à sa position tridimensionnelle M(X, Y, Z) dans l'espace de représentation lié au repère géographique absolu. Cela est possible, car, comme le montre la figure 2, la mesure interférométrique d'altitude et la localisation ont permis d'établir une relation biunivoque entre l'espace de mesure et l'espace de représentation. On peut ainsi poser :

$$(D, f_d) = L(X, Y, Z)$$

ou, en détaillant explicitement :

$$D = \sqrt{(X - X_c)^2 + (Y - Y_c)^2 + (Z - Z_c)^2}$$

et

$$f_d = \frac{2}{\lambda D} \vec{V_c} . \vec{CM}$$

$$= \frac{2}{\lambda} \left[ V_\rho \sin\alpha_c (X - X_c) + V_\rho \cos\alpha_c (Y - Y_c) + V_z (Z - Z_c) \right]$$

c étant un indice désignant l'avion.

En ce qui concerne l'altitude Z, il n'y a pas lieu de conserver la mesure radar $Z_{rad}$ si elle est de précision inférieure à celle de l'altitude de référence $Z_{ref}$ de sorte que l'on prend :

$$Z = Z_{ref}(X, Y)$$

L'opération de mise en conformité géométrique est effectuée pour tous les points de la vue radar brute du sol.

En ce qui concerne la précision obtenue, il faut distinguer la précision dans le repère terrestre lié à l'avion et celle dans le repère terrestre absolu.

Dans le premier cas d'une localisation par rapport au repère terrestre tridimensionnel lié à l'avion, les erreurs de mesure propres au radar ($\delta D$ et $\delta f_d$) sont très faibles. Sous réserve que le vecteur vitesse de l'avion soit connu avec une précision suffisante ($10^{-4}$ par exemple dans certaines applications), l'erreur de localisation horizontale induite par le radar utilisé en appareil de prise de vue est alors limitée par la résolution radiale et transversale du mode de fonctionnement du radar. L'erreur de localisation horizontale due à l'erreur sur la mesure d'altitude du terrain est au moins d'un ordre de grandeur inférieure à cette dernière dans les conditions habituelles de prise de vue. L'erreur de localisation verticale est elle, proche de celle du fichier numérique définissant l'atlas de cartes mémorisées. Enfin, il faut ajouter l'erreur de recalage de la route avion. En résumé, l'erreur de localisation horizontale présente trois composantes :

- une première composante $\delta M1$ qui est due aux erreurs de mesure radar sur D et $f_d$ et qui est inférieure à la résolution du radar,

$$\delta M1 \leq ré\,solution$$

- une deuxième composante δM2 qui provient de l'erreur commise sur l'altitude et qui est inférieure au dixième de cette dernière :

$$\delta M2 \leq\sim 0,1\left(\delta Z + \delta Z_c\right)$$

et

- une troisième composante δM3 due à l'erreur de route de l'avion : $\delta M3 \leq D\delta\alpha_c$

L'erreur de localisation verticale δV est elle égale à la somme de l'erreur d'altitude du fichier définissant l'atlas de cartes mémorisées et de l'erreur de positionnement vertical de l'avion :

$$\delta V = \delta Z_{ref} + \delta Z_c$$

Dans le deuxième cas d'une localisation par rapport à un repère terrestre tridimentionnel absolu, il faut ajouter à l'erreur de localisation horizontale, les erreurs de recalage horizontal $\delta X_c$ et $\delta Y_c$. Celles-ci dépendent de la résolution horizontale du fichier numérique définissant l'atlas de cartes mémorisées et d'autres paramètres tels que la surface de la vue radar du sol, le type de relief, etc...

Pour l'estimation des erreurs de localisation, on a supposé que l'incertitude sur le vecteur vitesse de l'avion ne portait que sur son orientation dans le plan horizontal ou sur la route de l'avion. Si il s'ajoute un terme d'erreur sur le module du vecteur vitesse de l'avion, la fonction d'erreur de localisation horizontale ne se réduit plus à la combinaison d'une translation et d'une rotation comme on l'a supposé dans l'établissement de la relation (2) adoptée pour le recalage horizontal et il faut y ajouter d'autres termes correctifs.

**Revendications**

1. Procédé de recalage de position de navigation estimée ($\hat{X}_c, \hat{Y}_c$) d'un mobile et de sa route estimée $\hat{\alpha}_c$ dans un repère terrestre absolu au moyen d'une cartographie radar d'une zone de terrain à relief accentué effectuée à l'aide d'un radar embarqué à bord du mobile et pourvu d'une antenne monopulse dans le plan vertical, qui consiste :

 - à prendre une vue radar d'une zone du sol au moment du recalage, depuis un point de localisation estimé de coordonnées (X,Y,Z), sous un angle de prise de vue S en site et G en azimut et à en déduire une image radar du sol à deux dimensions définie par un tableau de coefficients de réflectivité de points du sol $\sigma_0(D,f_d)$ repérés par une coordonnée D de distance radiale selon l'axe de pointage du faisceau du radar et par une coordonnée $f_d$ de décalage de fréquence Doppler selon une direction transversale à l'axe du faisceau du radar parallèle à la route du mobile, S et G étant respectivement les angles en site et en azimut dans un repère terrestre lié au mobile avec un axe de coordonnée x horizontal parallèle à la route du mobile et un axe de coordonnée y horizontal perpendiculaire à la route du mobile,
 - à mesurer, par un procédé interférométrique, l'angle de site $S+\delta_S$ des différents points de l'image radar du sol au moyen de l'antenne utilisée en monopulse dans le plan vertical, $\delta_s$ étant l'écart en site du point considéré par rapport à l'axe du faisceau radar,
 - à déduire du décalage de fréquence Doppler $f_d$ et de l'angle de site $S+\delta_s$ mesurés pour chaque point de l'image radar du sol, l'angle d'azimut $G+\delta_G$, par rapport à la route du mobile, de chaque point de l'image radar du sol, G étant l'angle d'azimut de l'axe du faisceau radar dans le repère terrestre lié au mobile et $\delta_G$ l'écart en azimut du point considéré par rapport à l'axe du faisceau radar par mise en oeuvre de la relation :

$$f_d = \frac{2V_c}{\lambda}\cos\left(G + \delta_G\right)\cos\left(S + \delta_S\right)$$

 $V_c$ étant le module du vecteur vitesse du mobile et $\lambda$ la longueur d'onde du radar,
 - à déduire les coordonnées tridimensionnelles estimés ($X,Y,Z_{rad}$) dans le repère terrestre absolu de chaque point l'image radar du sol à deux dimensions (D, $f_d$) à partir de ses coordonnées sphériques : distance D, angle de site $S + \delta_s$ et angle d'azimut $G + \delta_G$ dans le repère lié au mobile par mise en oeuvre des relations :

$$\begin{cases} \hat{X} = \hat{X}_c + D\cos(S + \delta_s)\cos(G + \delta_G - \alpha_c) \\ \hat{Y} = \hat{Y}_c + D\cos(S + \delta_s)\sin(G + \delta_G - \alpha_c) \\ \hat{Z}_{rad} = \hat{Z}_c - D\sin(S + \delta_s) \end{cases}$$

$\alpha_c$ étant l'angle que fait la route du mobile par rapport au repère terrestre absolu,

- à rechercher sur une carte tridimensionnelle, à coordonnées $(X, Y, Z_{ref})$, stockée en mémoire, des zones dont les coordonnées X et Y des points correspondent aux coordonnées X et Y des points de l'image radar avec différents jeux de valeurs d'écarts possibles $\Delta X_c$, $\Delta Y_c$ et $\Delta \alpha_c$ pour la position et la route du mobile par mise en oeuvre de la relation :

$$\begin{pmatrix} \hat{X} \\ \hat{Y} \end{pmatrix} = \begin{pmatrix} X \\ Y \end{pmatrix} + \begin{pmatrix} \Delta X_c \\ \Delta Y_c \end{pmatrix} + \sqrt{(X - \hat{X}_c + \Delta X_c)^2 + (Y - \hat{Y}_c + \Delta Y_c)^2} \, \Delta \alpha_c \begin{pmatrix} -\sin G \\ \cos G \end{pmatrix}$$

- à calculer le maximum du coefficient de corrélation p entre les altitudes $\hat{Z}_{rad}$ et $\hat{Z}_{ref}$ des points de l'image radar du sol repérés en coordonnées tridimensionnelless et des points de chaque zone de la carte tridimensionnelle lui correspondant pour les différents jeux de valeurs d'écarts possibles $\Delta X_c$, $\Delta Y_c$ et $\Delta \alpha_c$ :

$$\underset{\Delta X_c, \Delta Y_c, \Delta \alpha_c}{MAX \, \rho} = \frac{E\left[(\hat{Z}_{rad} - \overline{Z}_{rad})(Z_{ref} - \overline{Z}_{ref})\right]}{\sqrt{E\left[(\hat{Z}_{rad} - \overline{Z}_{rad})^2\right] E\left[(Z_{ref} - \overline{Z}_{ref})^2\right]}}$$

- à adopter comme termes correctifs de la position et de la route du mobile le jeu de valeurs $\Delta X_c$, $\Delta Y_c$ et $\Delta \alpha_c$ correspondant au maximum obtenu.

2. Procédé selon la revendication 1, **caractérisé en ce qu'**il consiste à recaler également la position verticale estimée $(Z_c)$ du mobile en adoptant comme terme correctif, la différence entre l'altitude moyenne mesurée des points de l'image radar du sol et l'altitude moyenne de référence des points de la zone de la carte lui correspondant par le jeu de termes correctifs $\Delta X_c$, $\Delta Y_c$ et $\Delta \alpha_c$ adoptés pour le recalage de la position et de la route du mobile

3. Procédé selon la revendication 2, **caractérisé en ce qu'**il consiste en outre à mettre en conformité géométrique les points de l'image radar avec la carte tridimensionnelle stockée en mémoire en affectant la réflectivité $\sigma_0$ de chaque point P de l'image radar repéré par une distance radiale D et un décalage de fréquence Doppler $f_d$ au point M de coordonnées cartésiennes X, Y, Z qui lui correspond sur la carte en utilisant les relations :

$$D = \sqrt{(X - X_c)^2 + (Y - Y_c)^2 + (Z - Z_c)^2}$$

$$f_d = \frac{2}{\lambda}\left[V_\rho \sin \alpha c (X - X_c) + V_\rho \cos \alpha c (Y - Y_c) + V_z (Z - Z_c)\right]$$

et

$$Z = Z_{ref}(X,Y)$$

où $X_c$, $Y_c$ et $Z_c$ sont les coordonnées cartésiennes de la position recalée du mobile, $\lambda$ la longueur d'onde du radar, $V_\rho$ le module de la projection horizontale du vecteur vitesse du mobile et $\alpha_c$ la route recalée du mobile.

**Claims**

1.  Method of realigning estimated navigation position $(\hat{X}_c/\hat{Y}_c)$ of a craft and of its estimated course $\hat{a}_c$ in an absolute terrestrial reference frame by means of a radar mapping of a region of terrain with uneven relief, performed with the aid of a radar on board the craft and provided with a monopulse antenna in the vertical plane, which consists:

    -   in taking a radar snapshot of a region of the ground at the moment of realignment, from an estimated locating point with coordinates (X,Y,Z), from a snapshot angle S in elevation and G in azimuth and in deducing therefrom a radar image of the ground in two dimensions, this image being defined by an array of reflectivity coefficients of points on the ground $\sigma_0(D,fd)$ referenced by a coordinate D of radial distance along the pointing axis of the beam of the radar and by a coordinate $f_d$ of Doppler frequency shift along a direction transverse to the axis of the beam of the radar parallel to the course of the craft, S and G being respectively the elevational and azimuthal angles in a terrestrial reference frame tied to the craft with a horizontal x coordinate axis parallel to the course of the craft and a horizontal y coordinate axis perpendicular to the course of the craft,
    -   in measuring, by an interferometric method, the angle of elevation $S + \delta_s$ of the various points of the radar image of the ground by means of the antenna used in monopulse mode in the vertical plane, $\delta_s$ being the elevational deviation of the point considered with respect to the axis of the radar beam,
    -   in deducing from the Doppler frequency shift $f_d$ and from the angle of elevation $S + \delta_s$, both measured for each point of the radar image of the ground, the angle of azimuth $G + \delta_G$, with respect to the course of the craft, of each point of the radar image of the ground, G being the angle of azimuth of the axis of the radar beam in the terrestrial reference frame tied to the craft and $\delta_G$ the azimuthal deviation of the point considered with respect to the axis of the radar beam by employing the relation:

$$f_d = \frac{2V_c}{\lambda}\cos(G + \delta_G)\cos(S + \delta_S)$$

$V_c$ being the modulus of the velocity vector of the craft and $\lambda$ the wavelength of the radar,
    -   in deducing the estimated three-dimensional coordinates $(X,Y,Z_{rad})$ in the absolute terrestrial reference frame of each point of the radar image of the ground in two dimensions $(D, f_d)$ from its spherical coordinates: distance D, angle of elevation $S + \delta_s$ and angle of azimuth $G + \delta_G$ in the reference frame tied to the craft by employing the relations:

$$\begin{cases} \hat{X} = \hat{X}_c + D\cos(S + \delta_s)\cos(G + \delta_G - \alpha_c) \\ \hat{Y} = \hat{Y}_c + D\cos(S + \delta_s)\sin(G + \delta_G - \alpha_c) \\ \hat{Z}_{rad} = \hat{Z}_c - D\sin(S + \delta_s) \end{cases}$$

$\alpha_c$ being the angle made by the course of the craft with respect to the absolute terrestrial reference frame,
    -   in searching a three-dimensional map, with coordinates (X, Y, $Z_{ref}$), stored in memory, for the regions for which the coordinates X and Y of the points correspond to the coordinates X and Y of the points of the radar image with various sets of values of possible deviations $\Delta X_c$, $\Delta Y_c$ and $\Delta\alpha_c$ for the position and the course of the craft by employing the relation:

$$\begin{pmatrix} \hat{X} \\ \hat{Y} \end{pmatrix} = \begin{pmatrix} X \\ Y \end{pmatrix} + \begin{pmatrix} \Delta X_c \\ \Delta Y_c \end{pmatrix} + \sqrt{\left(X - \hat{X}_c + \Delta X_c\right)^2 + \left(Y - \hat{Y}_c + \Delta Y_c\right)} \Delta \alpha_c \begin{pmatrix} -\sin G \\ \cos G \end{pmatrix}$$

- in calculating the maximum of the coefficient of correlation $\rho$ between the altitudes $\hat{Z}_{rad}$ and $Z_{ref}$ of the points of the radar image of the ground as referenced in three-dimensional coordinates and of the points of each region of the three-dimensional map corresponding thereto for the various sets of values of possible deviations $\Delta X_c$, $\Delta Y_c$ and $\Delta \alpha_c$:

$$\underset{\Delta X_c, \Delta Y_c, \Delta \alpha_c}{MAX \ \rho} = \frac{E\left[\left(\hat{Z}_{rad} - \overline{Z}_{rad}\right)\left(Z_{ref} - \overline{Z}_{ref}\right)\right]}{\sqrt{E\left[\left(\hat{Z}_{rad} - \overline{Z}_{rad}\right)^2\right] E\left[\left(Z_{ref} - \overline{Z}_{ref}\right)^2\right]}}$$

and,
- in adopting the set of values $\Delta X_c$, $\Delta Y_c$ and $\Delta \alpha_c$ - corresponding to the maximum obtained as corrective terms for the position and for the course of the craft.

2. Method according to Claim 1, **characterized in that** it consists in also realigning the estimated vertical position ($Z_c$) of the craft by adopting as corrective term, the difference between the measured average altitude of the points of the radar image of the ground and the reference average altitude of the points of the region of the map corresponding thereto via the set of corrective terms $\Delta X_c$, $\Delta Y_c$ and $\Delta \alpha_c$ adopted for the realignment of the position and of the course of the craft.

3. Method according to Claim 2, **characterized in that** it consists furthermore in geometrically matching the points of the radar image with the three-dimensional map stored in memory by assigning the reflectivity $\sigma_o$ of each radar image point P referenced by a radial distance D and a Doppler frequency shift $f_d$ to the point M with Cartesian coordinates X, Y, Z which corresponds thereto on the map by using the relations:

$$D = \sqrt{\left(X - X_c\right)^2 + \left(Y - Y_c\right)^2 + \left(Z - Z_c\right)^2}$$

$$f_d = \frac{2}{\lambda}\left[V_\rho \sin \alpha_c (X - X_c) + V_\rho \cos \alpha_c (Y - Y_c) + V_z (Z - Z_c)\right]$$

and

$$Z = Z_{ref}(X, Y)$$

where $X_c$, $Y_c$ and $Z_c$ are the Cartesian coordinates of the realigned position of the craft, $\lambda$ the wavelength of the radar, $V_\rho$ the modulus of the horizontal projection of the velocity vector of the craft and $\alpha_c$ the realigned course of the craft.

**Patentansprüche**

1. Verfahren zur Ortung der geschätzten Navigationsposition $(\hat{X}_c, \hat{Y}_c)$ eines Fahrzeugs und seiner geschätzten Route $\alpha_c$ in einem absoluten terrestrischen Bezugssystem mithilfe einer Radarkartographie, die in einer Landschaftszone mit stark hügeligem Relief von einem in dem Fahrzeug mitgeführten und mit einer Monopulse-Antenne in der vertikalen Ebene ausgerüsteten Radargerät durchgeführt wird, wobei das Verfahren darin besteht:

   - ein Radarbild einer Zone am Boden im Augenblick der Ortung ausgehend von einem geschätzten Punkt mit den Koordinaten (X, Y, Z) unter einem Elevationswinkel S und einem Azimutwinkel G aufzunehmen, und daraus ein zweidimensionales Radarbild des Bodens abzuleiten, das durch eine Tabelle von Reflektivitätskoeffizienten $\sigma_o(D, f_d)$ des Bodens abhängig von einer Koordinaten D der radialen Entfernung entlang der Achse des Radarstrahls und von einer Koordinate $f_d$ der Dopplerfrequenz-Verschiebung gemäß einer Richtung quer zur Achse des zur Route des Fahrzeugs parallelen Radarstrahls definiert ist, wobei S und G die Winkel in Elevationsrichtung beziehungsweise Azimutrichtung gemäß einem mit dem Fahrzeug verknüpften terrestrischen Bezugssystem mit einer zur Route des Fahrzeugs parallelen und horizontalen Koordinatenachse x und einer zur Route des Fahrzeugs senkrechten und ebenfalls horizontalen Koordinatenachse y sind,
   - durch ein interferometrisches Verfahren den Elevationswinkel $S + \delta_s$ für die verschiedenen Punkte des Radarbilds des Bodens mithilfe der Antenne zu messen, die im Monopulsbetrieb in der vertikalen Ebene verwendet wird, wobei $\delta_s$ der Abstand des betrachteten Punkts in Elevationsrichtung bezüglich der Achse des Radarstrahls ist,
   - aus der Dopplerfrequenz-Verschiebung $f_d$ und der Verschiebung des Elevationswinkels $S+\delta_s$, die für jeden Punkt des Radarbilds des Bodens gemessen werden, den Azimutwinkel $G+\delta_G$ bezüglich der Route des Fahrzeugs für jeden Punkt des Radarbilds des Bodens abzuleiten, wobei G der Azimutwinkel der Achse des Radarstrahls in dem auf das Fahrzeug bezogenen terrestrischen Bezugssystem und $\delta_G$ der Abstand des betrachteten Punkts in Azimutrichtung bezüglich der Achse des Radarstrahls gemäß folgender Beziehung ist:

$$f_d = \frac{2V_c}{\lambda}\cos(G + \delta_G)\cos(S + \delta_S)$$

   wobei $V_c$ der Modul des Geschwindigkeitsvektors des Fahrzeugs und $\lambda$ die Wellenlänge des Radargeräts ist,

   - die dreidimensionalen geschätzten Koordinaten $(\hat{X}, \hat{Y}, \hat{Z}_{rad})$ im absoluten terrestrischen Bezugssystem für jeden Punkt des zweidimensionalen Radarbilds des Bodens $(D, f_d)$ ausgehend von seinen sphärischen Koordinaten, nämlich dem Abstand D, dem Elevationswinkel $S+\delta_s$ und dem Azimutwinkel $G+\delta_G$ in dem auf das Fahrzeug bezogenen Bezugssystem aufgrund folgender Beziehungen abzuleiten:

$$\begin{cases} \hat{X} = \hat{X}_c + D\cos(S + \delta_s)\cos(G + \delta_G - \alpha_c) \\ \hat{Y} = \hat{Y}_c + D\cos(S + \delta_s)\sin(G + \delta_G - \alpha_c) \\ \hat{Z}_{rad} = \hat{Z}_c - D\sin(S + \delta_s) \end{cases}$$

   wobei $\alpha_c$ der Winkel zwischen der Route des Fahrzeugs und dem absoluten terrestrischen Bezugssystem ist,

   - in einer gespeicherten dreidimensionalen Karte mit Koordinaten $(X, Y, Z_{ref})$ Zonen zu suchen, in denen die Koordinaten X und Y der Punkte den Koordinaten X und Y der Punkte des Radarbilds entsprechen, mit verschiedenen möglichen Sätzen von Abweichungswerten $\Delta C_c$, $\Delta Y_c$ und $\Delta\alpha_c$ für die Position und die Route des Fahrzeugs aufgrund der folgenden Beziehung,

$$\begin{pmatrix} \hat{X} \\ \hat{Y} \end{pmatrix} = \begin{pmatrix} X \\ Y \end{pmatrix} + \begin{pmatrix} \Delta X_c \\ \Delta Y_c \end{pmatrix} + \sqrt{\left(X - \hat{X}_c + \Delta X_c\right)^2 + \left(Y - \hat{Y}_c + \Delta Y_c\right)}\,\Delta\alpha_c \begin{pmatrix} -\sin G \\ \cos G \end{pmatrix}$$

schen den Höhenwerten $\hat{Z}_{rad}$ und $Z_{ref}$ der in Form von dreidimensionalen Koordinaten ermittelten Punkte des Radarbilds des Bodens und entsprechenden Punkten jeder Zone der dreidimensionalen Karte für die verschiedenen möglichen Sätze von Abweichungswerten $\Delta X_c$, $\Delta Y_c$ und $\Delta\alpha_c$ zu berechnen:

$$\underset{\Delta X_c, \Delta Y_c, \Delta\alpha_c}{MAX\cdot\rho} = \frac{E\left[\left(\hat{Z}_{rad} - \overline{Z}_{rad}\right)\left(Z_{ref} - \overline{Z}_{ref}\right)\right]}{\sqrt{E\left[\left(\hat{Z}_{rad} - \overline{Z}_{rad}\right)^2\right]E\left[\left(Z_{ref} - \overline{Z}_{ref}\right)^2\right]}}$$

- und als Korrekturgrößen für die Position und die Route des Fahrzeugs denjenigen Satz von Werten $\Delta X_c$, $\Delta Y_c$ und $\Delta\alpha_c$ auszuwählen, der dem erhaltenen Maximalwert entspricht.

2. Verfahren nach Anspruch 1, **dadurch gekennzeichnet, daß** es darin besteht, auch die vertikale geschätzte Position ($Z_c$) des Fahrzeugs zu bestimmen, indem als Korrekturgröße die Differenz zwischen der mittleren gemessenen Höhe der Punkte des Radarbilds des Bodens und der mittleren Bezugshöhe der Punkte der Zone auf der Karte gewählt wird, die ihr aufgrund des für die Bestimmung der Position und der Route des Fahrzeugs gewählten Satzes von Korrekturgrößen $\Delta X_c$, $\Delta Y_c$ und $\Delta\alpha_c$ entsprechen.

3. Verfahren nach Anspruch 2, **dadurch gekennzeichnet, daß** es außerdem darin besteht, die Punkte des Radarbilds mit der gespeicherten dreidimensionalen Karte in geometrische Übereinstimmung zu bringen, indem die Reflektivität $\sigma_o$ jedes erfaßten Punkts P des Radarbilds mit einer radialen Geschwindigkeit D und einer Dopplerfrequenz-Verschiebung $f_d$ mit dem auf der Karte entsprechenden Punkt M mit den kartesischen Koordinaten X, Y, Z unter Verwendung der folgenden Beziehungen verknüpft wird:

$$D = \sqrt{(X - X_c)^2 + (Y - Y_c)^2 + (Z - Z_c)^2}$$

$$f_d = \frac{2}{\lambda}\left[V_\rho \sin\alpha c(X - X_c) + V_\rho \cos\alpha c(Y - Y_c) + V_z(Z - Z_c)\right]$$

$$Z = Z_{ref}(X,Y)$$

wobei $X_c$, $Y_c$ und $Z_c$ die kartesischen Koordinaten der ermittelten Position des Fahrzeugs, $\lambda$ die Wellenlänge des Radargeräts, $V_\rho$ der Modul der horizontalen Projektion des Geschwindigkeitsvektors des Fahrzeugs und $\alpha_c$ die gefundene Route des Fahrzeugs ist.

FIG.1

FIG.2